# EUROPÄISCHE PATENTSCHRIFT

(11) **EP 3 511 645 B1**
(45) Veröffentlichungstag und Bekanntmachung des Hinweises auf die Patenterteilung: **28.04.2021**
(21) Anmeldenummer: 19151109.6
(22) Anmeldetag: 10.01.2019
(51) Int. Cl.: F24H 3/04, F24H 9/18

(54) **ELEKTRISCHE HEIZVORRICHTUNG**
ELECTRIC HEATING DEVICE
DISPOSITIF DE CHAUFFAGE ÉLECTRIQUE

(30) Priorität: 11.01.2018 DE 102018200433
(43) Veröffentlichungstag der Anmeldung: 17.07.2019
(73) Patentinhaber: Eberspächer catem GmbH & Co. KG, 76863 Herxheim (DE)
(72) Erfinder: Gschwind, Thomas, 67098 Bad Dürkheim (DE)
(74) Vertreter: Grünecker Patent- und Rechtsanwälte PartG mbB

(56) Entgegenhaltungen:
- EP-A1- 1 933 598
- EP-A2- 1 698 840
- WO-A1-2014/119902
- DE-A1- 4 404 345
- FR-A1- 3 037 867

## Beschreibung

Die vorliegende Erfindung betrifft eine elektrische Heizvorrichtung mit einem Heizblock, der einander gegenüberliegende Flächen für den Eintritt und den Austritt für zu erwärmende Luft ausbildet. Der Heizblock hat zumindest eine wärmeerzeugende Lage mit zumindest einem PTC-Element. Beidseitig an dieser wärmeerzeugenden Lage liegen wärmeabgebende Elemente an.

Eine elektrische Heizvorrichtung mit den oberbegrifflichen Merkmalen von Anspruch 1 ist aus FR 3 037 867 A1 bekannt.

Diese Druckschrift offenbart zwei ebene Bleche, die zwischen sich PTC-Elemente aufnehmen und bestromen und mit einer Vielzahl von ausgestanzten Löchern versehen sind, durch die die zu erwärmende Luft hindurchtritt.

Elektrische Heizvorrichtungen für die Erwärmung von Luft in einem Kraftfahrzeug beschreiben auch EP 2 017 103 A1 sowie EP 2 873 296 A1. Die letztgenannte Druckschrift offenbart dabei eine wärmeerzeugende Lage, die elektrisch von den wärmeabgebenden Lagen isoliert ist.

Bei dem zuvor beschriebenen Stand der Technik befindet sich der Heizblock üblicherweise in einem Rahmen als geschichteter Aufbau, in dem die wärmeerzeugende Lage, bevorzugt mehrere wärmeerzeugende Lagen, quer zur Durchtrittsrichtung der Luft durch den Heizblock parallel zueinander angeordnet sind.

Die wärmeerzeugende Lage umfasst dabei Kontaktbleche, die an gegenüberliegenden Flächen an dem PTC-Element anliegen, um das PTC-Element zu bestromen. Auf der gegenüberliegenden Seite relativ zu dem PTC-Element liegen die wärmeabgebenden Lagen an den Kontaktblechen an. Bei einer hochelektrischen Heizvorrichtung, die mit Hochvolt betrieben werden kann, liegt die wärmeabgebende Lage jeweils unter Zwischenlage zumindest einer Isolierung an dem zugeordneten Kontaktblech an.

Der zuvor beschriebene Aufbau hat weite Verbreitung gefunden. Er lässt aber noch Möglichkeiten zur Verbesserung offen.

WO 2014/119902 A1 offenbart ein einheitliches Metallelement, welches einen Aufnahmekanal für die Aufnahme eines PTC-Elementes innerhalb eines Positionsrahmens mit einem, dem PTC-Element jeweils unterlegten Kontaktblech, welches unter Zwischenlage einer Isolierschicht an dem Metallelement anliegt, aufgenommen sind. Der Kanal wird von ebenen Flächenelementen überragt, die durch das Metallelement einteilig ausgebildet und zur Schaffung von Wärmeübertragungsrippen stanzbearbeitet sind. Auf dieses Bauteil ist ein flächenmäßiges Erzeugnis aufgelegt, welches in gleicher Weise ausgeformte Wärmeübertragungsrippen ausbildet. So ergeben sich zwei unterschiedliche wärmeabgebende Lagen, die jeweils für sich Eintritts- und Austrittsöffnungen für die zu erwärmende Luft ausbilden, welche die Wärmeübertragungsrippen überstreicht.

Die vorliegende Erfindung will eine elektrische Heizvorrichtung der eingangs genannten Art angeben, die sich wirtschaftlich und einfacher herstellen lässt und die Möglichkeit offen lässt, die elektrische Heizvorrichtung mit weniger Teilen auszubilden.

Zur Lösung der obigen Aufgabenstellung wird mit der vorliegenden Erfindung eine elektrische Heizvorrichtung mit den Merkmalen von Anspruch 1 angegeben.

Bei dieser elektrischen Heizvorrichtung bildet eine der wärmeabgebenden Lagen die Fläche für den Eintritt der zur erwärmenden Luft und die andere der wärmeabgebenden Lagen bildet die Fläche für den Austritt der zu erwärmenden Luft. Mit anderen Worten liegt eine der wärmeabgebenden Lagen an der Vorderseite und die andere an der Rückseite des Heizblocks. In die eine wärmeabgebende Lage tritt die Luft ein, an der anderen wärmeabgebenden Lage tritt die Luft aus. Die wärmeabgebende Lage für den Eintritt der Luft bildet üblicherweise keinen Flächenanteil an der gegenüberliegenden Fläche des Heizblocks zum Austritt der Luft. Entsprechendes gilt für die an dem Austritt vorgesehene Lage. Diese nimmt keine Flächenanteile des Heizblocks an der durch den Heizblock für den Eintritt der Luft gebildeten Fläche ein.

Die beiden Flächen sind üblicherweise in Strömungsrichtung der Luft hintereinander vorgesehen. Die wärmeerzeugende Lage ist zwischen den wärmeabgebenden Lagen angeordnet. In Durchtrittsrichtung der Luft befindet sich dementsprechend zunächst am Eingang die erste wärmeabgebende Lage. Es folgt in Strömungsrichtung der Luft das oder die PTC-Elemente. Weiter in Strömungsrichtung hinter dem PTC-Element befindet sich die andere, zweite wärmeabgebende Lage.

Damit schafft die vorliegende Erfindung ein vollkommen neues Konstruktionsprinzip zur Ausbildung einer elektrischen Heizvorrichtung, insbesondere eines Luftheizers für ein Kraftfahrzeug. Ein solcher Luftheizer wird üblicherweise in einem HVAC verbaut und befindet sich in Strömungsrichtung vor oder hinter einem konventionellen Wärmetauscher zur Klimatisierung des Fahrzeuginnenraums.

Gemäß der vorliegenden Erfindung werden die wärmeabgebenden Lagen jeweils durch ein stanzbearbeitetes Blech gebildet. Jeweils eine der wärmeabgebenden Lagen wird durch ein einheitliches stanzbearbeitetes Blech ausgebildet. Die Stanzbearbeitung des Blechs erfolgt dabei so, dass sich Wärmeübertragungsrippen ergeben, die üblicherweise parallel zu der den Heizblock durchströmenden Luft vorgesehen sind, d. h. sich im Wesentlichen rechtwinklig zu der Eintritts- bzw. Austrittsfläche des Heizblocks erstrecken. Nach der Erfindung erfolgt die Stanzbearbeitung des Blechs allerdings so, dass nach dieser Bearbeitung das Blech eine Anlagefläche zur Kontaktierung des PTC-Elementes ausbildet. Diese Kontaktierung kann eine wärmeleitende und elektrische Kontaktierung sein. Sie kann aber auch lediglich eine wärmeleitende Kontaktierung sein, wenn, wie dies eine bevorzugte Weiterbildung der vorliegenden Erfindung angibt, das PTC-Element unter Zwischenlage einer elektrischen Isolierschicht wärmeleitend an den wärmeabgebenden Lagen anliegt. Für diese Fallgestaltung befindet sich zwischen der Isolierschicht und dem PTC-Element eine Leiterbahn, die elektrisch mit dem PTC-Element kontaktiert ist, um dieses zu bestromen. Es befinden sich üblicherweise auf einander gegenüberliegenden Außenseiten zugeordneter Kontaktbleche Isolierungen, so dass beide wärmeabgebende Lagen, die dem PTC-Element zugeordnet sind, elektrisch isoliert von der dazwischen angeordneten wärmeerzeugenden Lage vorgesehen sind.

Das die wärmeabgebende Lage ausbildende Blech ist mäandrierend gebogen, und zwar derart, dass die Anlagefläche für das PTC-Element durch mehrere, sich vorzugsweise parallel erstreckende Stege des Blechs gebildet ist. Von diesen Stegen gehen jeweils sich in Strömungsrichtung der zu erwärmenden Luft erstreckende Wärmeübertragungsrippen ab. Dabei ist das Blech üblicherweise wesentlich breiter als die Anlagefläche. So werden bevorzugt durch das Blech von der Anlagefläche beidseitig und sich parallel zu in einer durch die Anlagefläche gebildeten Ebene erstreckende Wärmeübertragungsrippen ab. Benachbart zu der Anlagefläche erlauben diese Wärmeübertragungsrippen den Durchtritt von Luft durch den Heizblock von der Eintrittsfläche zu der Austrittsfläche. Das Blech ist dabei üblicherweise lediglich durch Stanzen und Biegen bearbeitet, um einerseits die Wärmeübertragungsrippen und andererseits die Anlagefläche für das PTC-Element auszubilden. Die Wärmeübertragungsrippen erstrecken sich dabei bevorzugt beidseitig in einer Richtung parallel zu einer durch die Anlagefläche gebildeten Ebene. Sie gehen bevorzugt beidseitig von der Anlagefläche ab. So befindet sich die Anlagefläche in Breitenrichtung einer wärmeerzeugenden Lage üblicherweise mittig zu der Längen- und Breitenerstreckung der wärmeerzeugenden Lage.

Zur Vereinfachung der Orientierung sei nachfolgend die Durchtrittsrichtung für die zu erwärmende Luft durch den Heizblock als Höhenrichtung bezeichnet. In dieser Richtung hat der Heizblock eine Höhe, die durch die einzelnen Dicken der beiden wärmeabgebenden Lagen und der wärmeerzeugenden Lage gebildet ist. Etwaige Kontaktbleche zur Bestromung des PTC-Elementes und außenseitig daran anliegende Isolierlagen sind dabei der wärmeerzeugenden Lage zuzuordnen. Rechtwinklig zu dieser Höhenerstreckung hat der Heizblock eine Längen- und Breitenerstreckung. Dabei ist die Breitenerstreckung diejenige Richtung des Heizblocks, die eine geringere Abmessung in der entsprechenden Ebene quer zur Durchtrittsrichtung der Luft als die Längsrichtung hat. In der die Breitenrichtung und die Längsrichtung enthaltenden Ebene bzw. parallel dazu liegt auch die Eintritts- bzw. Austrittsfläche des Heizblocks, der üblicherweise quaderförmig ausgebildet ist, jedenfalls üblicherweise parallel zueinander vorgesehene Eintritts- und Austrittflächen hat. Die Wärmeübertragungsrippen überragen die Anlagefläche beidseitig in Breitenrichtung. Darüber hinaus sind regelmäßig eine Vielzahl von Wärmeübertragungsrippen und Stege in Längsrichtung hintereinander vorgesehen, wobei die mehreren Stege jeweils für sich eine Anlagefläche oder einen Anteil davon für ein PTC-Element oder aber mehrere Anlageflächen für mehrere PTC-Elemente ausbilden.

Zur Erhöhung der Stabilität der wärmeabgebenden Lage und zur Positionierung derselben in einem etwaig vorzusehenden Rahmen wird gemäß einer bevorzugten Weiterbildung der vorliegenden Erfindung vorgeschlagen, dass die Wärmeübertragungsrippen an ihren gegenüberliegenden freien Enden jeweils durch einen sich parallel zu den Stegen erstreckenden Verbindungssteg miteinander verbunden sind. Dieser Verbindungssteg befindet sich üblicherweise mit seiner äußeren Oberfläche in der die Anlagefläche enthaltenden Ebene. Mit anderen Worten ist der Verbindungssteg bevorzugt wie der die Anlagefläche ganz oder teilweise ausbildende Steg ausgeformt. Er hat die gleiche Erstreckungsrichtung und Höhenlage. Der Steg und die Verbindungsstege verhindern an dieser Stelle den Durchtritt von Luft durch die wärmeabgebende Lage. Dieser ist lediglich zwischen diesen stegförmigen Elementen möglich. Hier können die Wärmeübertragungsrippen durch eine Stanzbearbeitung auch luftdurchlässig oder mit Vorsprüngen oder Rauigkeiten versehen sein, um eine verbesserte Wärmeübertragung zu ermöglichen.

Die Verbindungsstege sind bevorzugt außenseitig mit einer Einkerbung versehen. Dadurch kann auch bei einer Anordnung der wärmeabgebenden Elemente randseitig an einem Rahmen zwischen einer Innenumfangsfläche einer durch den Rahmen vorgegebenen Rahmenöffnung und der Außenfläche der wärmeabgebenden Lage Luft hindurchtreten. So ergibt sich eine gewisse Kühlung zwischen dem Rand der wärmeabgebenden Lagen und dem Rahmen.

Die beiden wärmeabgebenden Lagen sind bevorzugt unter Zwischenlage des PTC-Elementes miteinander verklebt. So ergibt sich eine bauliche Einheit aus den beiden wärmeerzeugenden Lagen und dem PTC-Element. Es versteht sich, dass hierbei ein elektrisch leitender Kleber verwendet wird oder die Klebeverbindung so ausgebildet wird, dass die unmittelbare Anlage des PTC-Elementes an den wärmeabgebenden Lagen durch die Klebeverbindung nicht vollends verhindert wird, so dass die PTC-Elemente über die wärmeabgebenden Lagen direkt bestromt werden können. Eine Klebeverbindung ist auch bei einer hochisolierenden Ausgestaltung möglich, bei welcher die Anlagefläche beispielsweise mit einer elektrisch isolierenden Schicht beklebt wird, auf deren Innenseite ein Kontaktblech aufgeklebt ist, welches wiederum mit dem PTC-Element bevorzugt über einen elektrisch leitenden Kleber verbunden ist. Ein elektrisch leitender Kleber wird beispielsweise durch einen Kunststoffkleber geschaffen, in den elektrisch leitende Partikel eingearbeitet sind.

Zum leichteren Einbau der elektrischen Heizvorrichtung ist in an sich bekannter Weise bevorzugt der Heizblock in einem Kunststoffrahmen aufgenommen. Der Kunststoffrahmen bildet einander gegenüberliegende Rahmenöffnungen aus, in denen jeweils mehrere sich parallel zueinander erstreckende wärmeabgebende Lagen freiliegen. Hierdurch kann eine elektrische Heizvorrichtung mit einer höheren Wärmeleistung geschaffen werden. Sofern bei einer solchen Ausgestaltung wärmeabgebende Lagen verwendet werden, die jeweils identisch ausgebildet sind, lassen sich die Herstellungskosten verringern. Dabei sind bevorzugt sämtliche wärmeabgebende Lagen der elektrischen Heizvorrichtung identisch ausgebildet. Bevorzugt sind die wärmeabgebenden Lagen unter Zwischenlage des bzw. der PTC-Elemente so aneinander gelegt, dass zwischen den Strukturen der wärmeabgebenden Lagen ausgebildete Luftführungskanäle absatzfrei ineinander übergehen. Die Luftführungskanäle der gegenüberliegenden wärmeabgebenden Elemente fluchten dementsprechend bevorzugt. Dadurch werden zu hohe Druckverluste der durch die wärmeabgebenden Lagen hindurchtretenden Luft vermieden. Alternativ kann auch ein gewisser Versatz der einander zugeordneten wärmeabgebenden Lagen beim Fügen dieser Lagen unter Zwischenlage des bzw. der PTC-Elemente eingestellt werden, um eine bestimmte Verwirbelung zu erreichen, die eine verbesserte Wärmeübertragung an der Grenzfläche zu der wärmeabgebenden Lage bewirkt.

Der Rahmen bildet bevorzugt einen Vorsprung aus, der zur formflüssigen Festlegung des Heizblocks an dem Rahmen von den beiden wärmeabgebenden Elementen umgriffen ist. Dieser Umgriff wird vervollständigt durch das Ankleben der zweiten wärmeabgebenden Lage an die in Strömungsrichtung der Luft darunterliegende Lage. Die wärmeabgebenden Lagen haben dazu bevorzugt Anschlusssegmente, die als ebene Blechsegmente den Vorsprung außenseitig übergreifen und somit den Heizblock formschlüssig an dem Rahmen festlegen. Die Anschlusssegmente erstrecken sich dabei üblicherweise parallel zu der Anlagefläche zur Kontraktierung des PTC-Elementes. Die Anschlusssegmente sind bevorzugt eben ausgebildet. Die Anschlusssegmente liegen dabei bevorzugt in einer Ebene, die die Lufteintritts- bzw. Austrittsfläche definiert oder nur geringfügig hierzu in Strömungsrichtung nach vorne oder nach hinten versetzt ist.

Die Anschlusssegmente sind dabei üblicherweise aus dem stanzbearbeiteten Blech gebildet, d. h. einteilig mit dem die wärmeabgebende Lage ausbildenden Blech ausgeformt. Die Anschlusssegmente sind mit einem Anschlussblech verbunden, welches zumindest eine Anschlussfahne ausformt. Über diese Anschlussbleche folgt dementsprechend die elektrische Kontaktierung des Heizblocks.

Die wärmeabgebenden Lagen sind bevorzugt mit elektrischen Anschlussfahnen versehen. Diese elektrischen Anschlussfahnen dienen der elektrischen Kontaktierung des Heizblocks. Sie können in dem zuvor erwähnten Kunststoffrahmen freiliegen oder diesen überragen. Es ist ebenso denkbar, den elektrischen Anschluss vollständig ohne einen Kunststoffrahmen zu bewirken.

Das hier diskutierte Anschlussblech stellt dementsprechend ein separates Anschlussfahnenelement dar, welches durch Klemmen, Schweißen, Umbördeln, Löten, Kleben oder Krimpen mit der wärmeerzeugenden Lage verbunden sein kann.

Hierzu weist das Anschlusssegment bevorzugt eine außermittig zu einer Mittellängsachse des wärmeerzeugenden Elements angeordnete Bohrung auf. Die Bohrung ist hinreichend groß bemessen, um ein Werkzeug gegen die gegenüberliegende Innenfläche des Anschlusssegmentes der jeweils anderen wärmeerzeugenden Lage zu führen, um hiergegen das Anschlussblech anzulegen und zu montieren. Durch die Bohrung kann beispielsweise ein Clinch-Werkzeug oder ein Schweißbolzen hindurchgeführt werden.

Die Anschlussfahnen können unmittelbar mit einem Kabel für den Leistungsstrom verbunden sein. Ebenso gut können die Anschlussfahnen unter Zwischenschaltung einer Steuerung mit dem Leistungsstrom verbunden sein, die in baulicher Einheit mit der elektrischen Heizvorrichtung vorgesehen, bevorzugt in einem Steuergehäuse angeordnet ist, welches mit dem Kunststoffrahmen verbunden ist und ganz oder teilweise durch den Kunststoffrahmen ausgebildet wird.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine perspektivische Seitenansicht eines wärmeabgebenden Elementes;
- Fig. 2: das in Fig. 1 eingezeichnete Detail A in vergrößerter Darstellung;
- Fig. 3: eine vergrößerte perspektivische Darstellung eines anschlussseitigen Endes des wärmeabgebenden Elements gemäß den Fig. 1 und 2;
- Fig. 4: eine perspektivische Ansicht entsprechend Fig. 3 für die Außenfläche der wärme-abgebenden Lage;
- Fig. 5: eine Draufsicht auf einen standbearbeitenden, die Wärme abgebende ausbilden-den Blechstreifen vor der Biegebearbeitung;
- Fig. 6: eine perspektivische Stirnseitenansicht eines Heizblocks gebildet aus den wärme-abgebenden Elementen nach den Fig. 1 bis 3;
- Fig. 7: eine perspektivische Draufsicht einer den luftaustrittsausbildenden Lage des Heiz-blocks gemäß Fig. 4 mit aufgelegten PTC-Elementen;
- Fig. 8: eine Darstellung gemäß Fig. 5 nach dem Aufbringen eines Kunststoffrahmens;
- Fig. 9: eine Ansicht gemäß den Fig. 5 und 6 nach Aufbringen der den lufteintrittsausbildenden Lage;
- Fig. 10: eine perspektivische Seitenansicht eines den Masseanschluss zu dem Heizblock nach den Fig. 4 und 7 ausbildenden Anschlussblechs und
- Fig. 11: eine Draufsicht auf Teile des Heizblocks und des Rahmens des Ausführungsbeispiels.

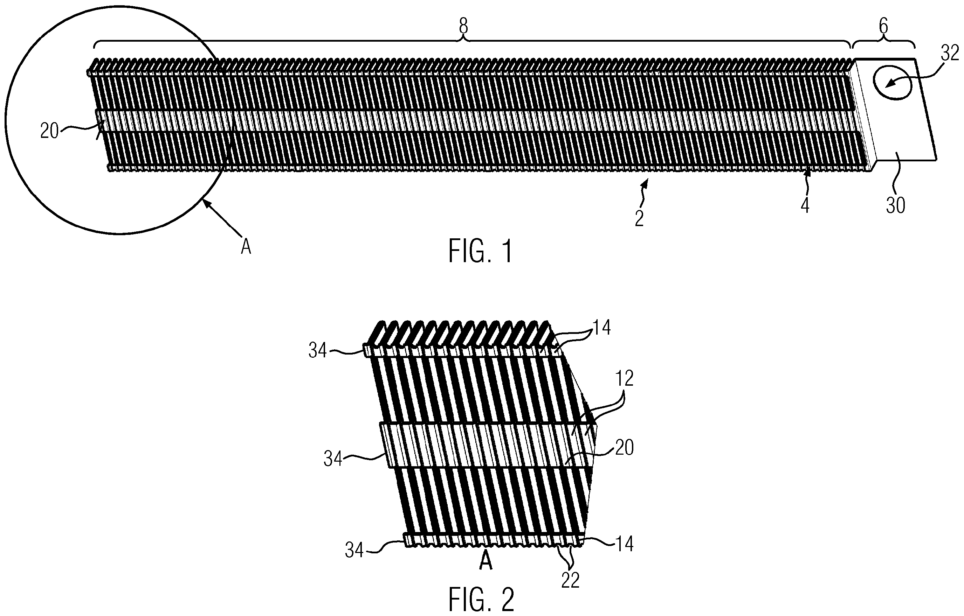

Die Figuren 1 bis 3 verdeutlichen ein Ausführungsbeispiel eines zur Ausbildung einer wärmeabgebenden Lage 2 stanzbearbeiteten Blechs 4. Das stanzbearbeitete Blech 4 hat einen Anschlussbereich 6 und einen Wärmeabgabebereich 8.

Der Wärmeabgabebereich 8 weist eine Vielzahl von Wärmeübertragungsrippen 10 auf, die über in einer ersten Ebene E1 liegende Stege 12 und Verbindungsstege 14 einerseits und über in einer zweiten Ebene E2 liegende Umbiegungen 16 andererseits miteinander verbunden sind. Die Ebenen E1 und E2 sind um die Erstreckung der Wärmeübertragungsrippen 10 voneinander beabstandet. Die Wärmeübertragungsrippen 10 erstrecken sich in Durchtrittsrichtung der zu erwärmenden Luft.

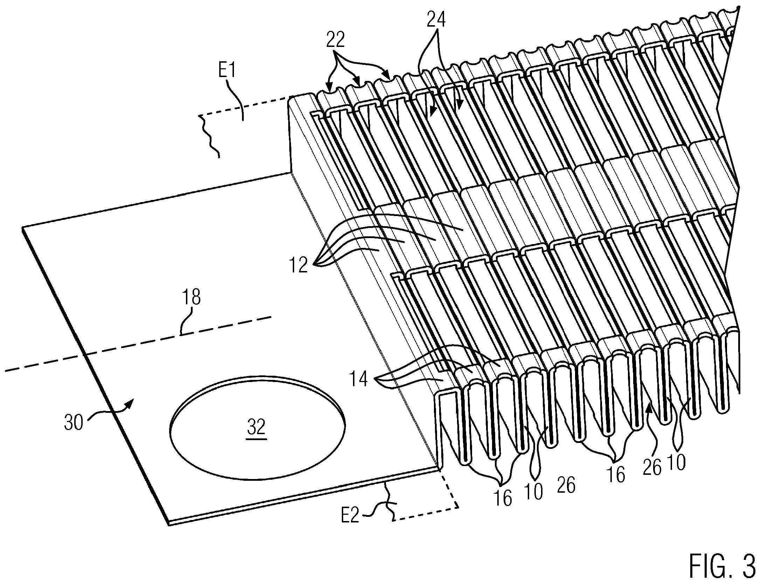

Die Stege 12 liegen auf einer Mittelängsachse 16 der wärmeabgebenden Lage 2 und bilden eine annähernd durchgehende Anlagefläche20 aus, die in der ersten Ebene E1 liegt. Die Verbindungsstege 14 sind jeweils an den sich gegenüberliegenden Enden der Wärmeübertragungsrippen 10 vorgesehen. Die hier in Bezug genommenen Enden sind diejenigen Enden, die in der ersten Ebene E1 liegen. Es handelt sich um die Erstreckungsrichtung der Wärmeübertragungsrippen 10 parallel zu den Ebenen E1 bzw. E2. Wie Fig. 3 verdeutlicht, haben die Verbindungsstege 14 eine sich nach außen öffnende Einkerbung 22.

Die Umbiegung 16 ist so ausgestaltet, dass zwei von benachbarten Verbindungsstegen 14 bzw. Stegen 12 abgehende Wärmeübertragungsrippen 10 im Grunde aneinander anliegen. Dies hat den Vorteil, dass die Anlagefläche 20, wie durch die Stege 12 gebildet wird, im Grunde durchgehend ausgebildet ist.

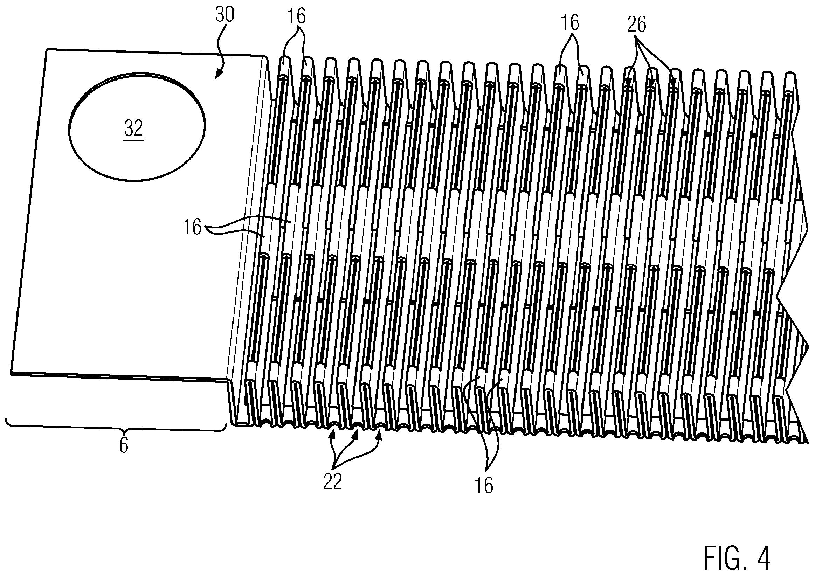

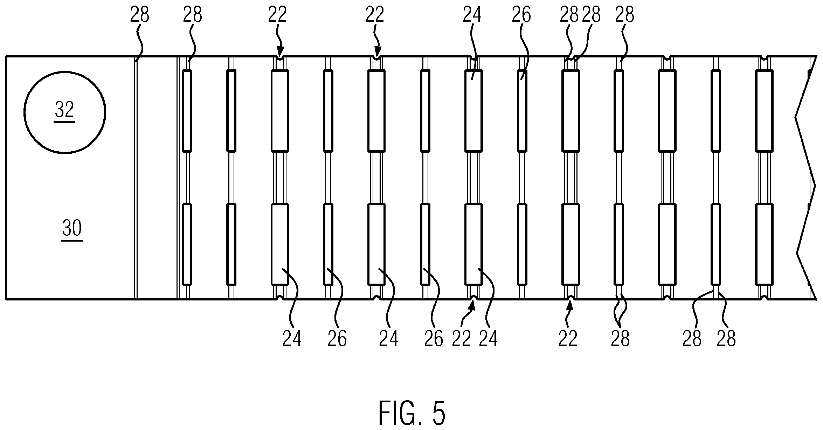

Durch eine vorherige Stanzbearbeitung, deren Stanzmuster sich aus Fig. 5 ergibt, sind zwischen den Verbindungsstegen 14 und den Stegen 12 große Druchbrechungen in den noch ebenen Blech 4 ausgebildet, die in Fig. 5 mit Bezugszeichen 24 gekennzeichnet sind. Dazwischen sind mit Bezugszeichen 26 gekennzeichnete kleine Durchbrechungen ausgeformt, die nach dem Biegen des Blechs 4 in der zweiten Ebene E2 liegen, welche die Sichtebene nach Fig. 4 darstellt. Durch diese Stanzbearbeitung ist die Möglichkeit gegeben, dass zu erwärmende Luft nicht nur die großen Durchbrechungen 24 durchsetzt, sondern auch in den Spalt zwischen den nahezu aneinander anliegenden Wärmeübertragungsrippen 10 gelangt, die von der Umbiegung 16 abgehen. Dadurch wird eine relativ große Luftübertragungsfläche gebildet, wobei der schmale Spalt zwischen den von der Umbiegung 16 abgehenden Wärmeübertragungsrippen 10 durch Grenzschichtverwirbelung eine höhere Wärmeübertragung ermöglicht.

In Fig. 5 sind ferner sich parallel erstreckende Biegelinien 28 eingetragen, um welche das zunächst ebene Material des Blechs 4 gebogen wird, um die in den Fig. 1 bis 4 gezeigte wärmeabgebende Lage 2 zu erzeugen.

Der Anschlussbereich 6 ist gebildet durch ein Anschlusssegment 30 des Blechs 4, welches sich in der zweiten Ebene E2 erstreckt und innerhalb dieser Ebene geradlinig verläuft. Das Anschlusssegment 30 ist mit einer Bohrung 32 versehen, die exzentrisch zu der Mittellängsachse 18 vorgesehen ist.

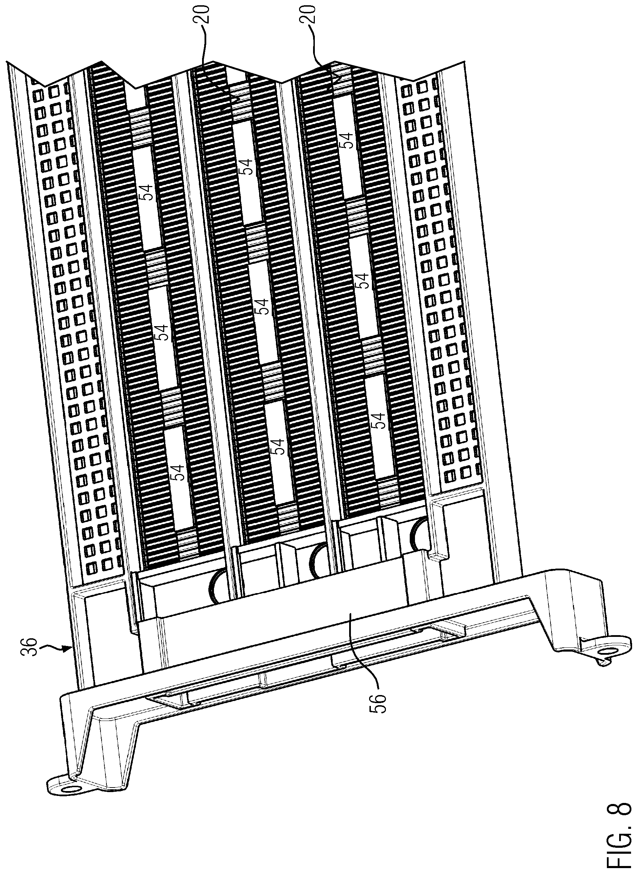

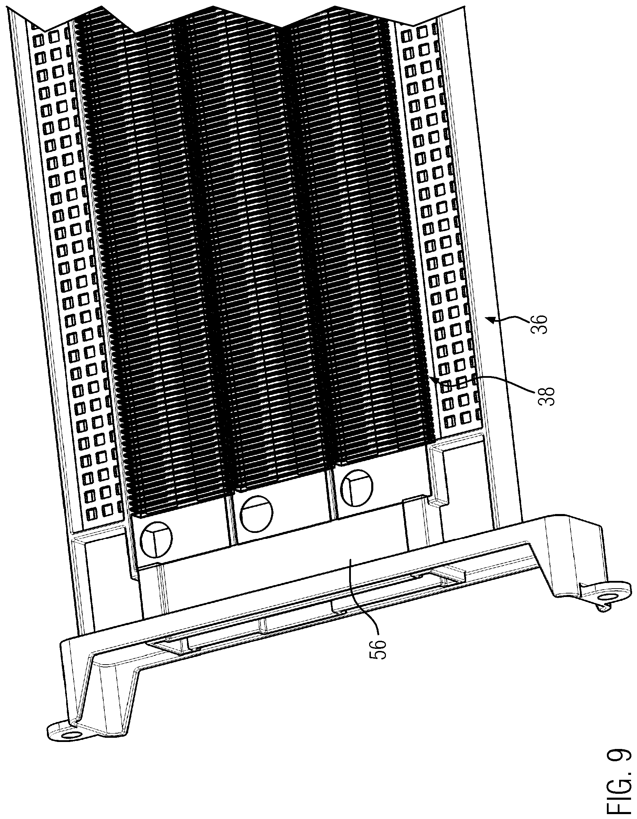

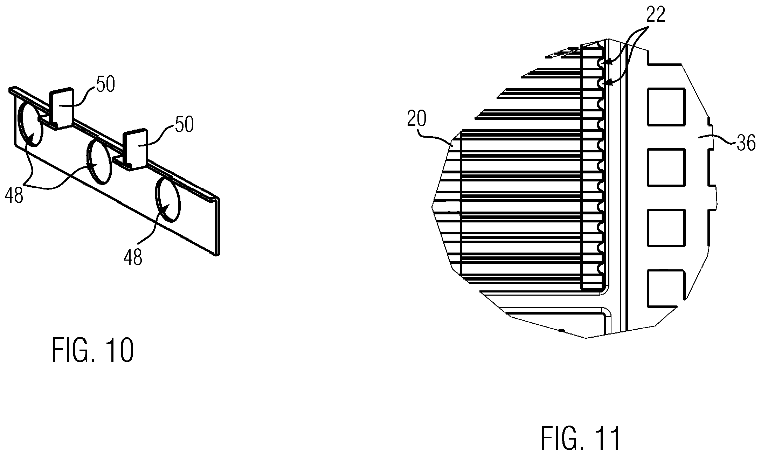

Wie Fig. 2 verdeutlicht, bilden die wärmeabgebenden Lagen 2 in der ersten Ebene E1 Verriegelungsvorsprünge 34 aus, die durch Stanzen des Blechs im Bereich des letzten Steges 12 besonders der letzten Verbindungsstege 14 ausgebildet sind. Diese Verriegelungsvorsprünge 34 können mit einer zugeordneten Ausnehmung eines Kunststoffrahmens 36 zusammenwirken, um einen Heizblock 38 an dem Kunststoffrahmen 36 zu befestigen (vgl. Fig. 9, 11). Alternativ kann der Kunststoffrahmen 36 auch einen stegförmigen Vorsprung aufweisen, der in Luftdurchtrittsrichtung mittig an dem Rahmen vorgesehen ist und von den Verriegelungsvorsprüngen 34 der gegeneinander angelegten Lagen 2 formschlüssig umgriffen ist. Eine ähnliche Befestigung ist an der Anschlussseite gewählt, was nachstehend unter Bezugnahme auf die Figuren 8 und 9 detaillierter erläutert werden wird.

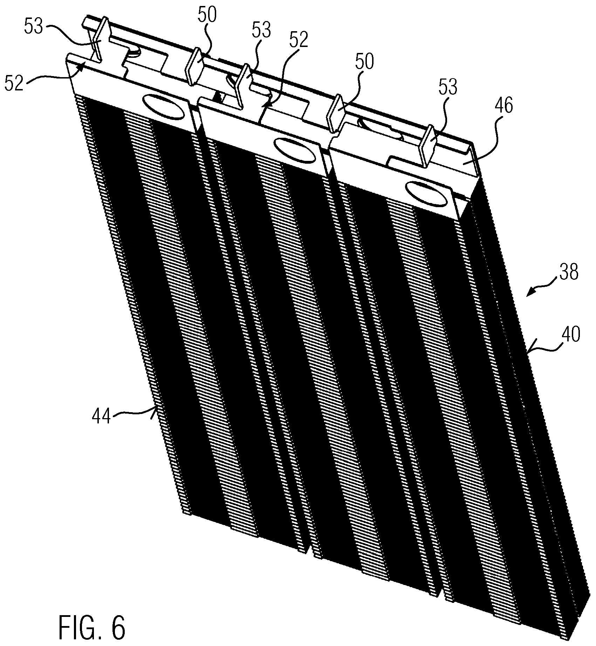

Fig. 6 zeigt den Heizblock 38 nach dem Fügen von drei wärmeabgebenden Lagen zur Ausbildung einer Luftaustrittsfläche 40 mit drei identischen wärmeabgebenden Lagen 42 zur Ausbildung einer Lufteintrittsfläche 44. Der Heizblock 38 ist mit Anschlussblechen für den elektrischen Anschluss des Heizblocks 38 versehen. Das mit Bezugszeichen 46 gekennzeichnete Anschlussblech dient dem Masseanschluss und ist mit sämtlichen drei wärmeabgebenden Lagen 2 über deren Anschlusssegmente 30 miteinander verbunden. Das entsprechende Anschlussblech 46 ist gesondert in Fig. 10 dargestellt. Es hat drei der Bohrung 32 entsprechende Anschlussblechbohrungen 49 und ist im Grund im Querschnitt L-förmig ausgeformt. Dabei wird der schmalere Schenkel der L-förmigen Querschnittsgestaltung durch zwei elektrische Anschlussfahnen 50 überragt, die durch Stanzen freigeschnitten und durch Biegen über die die schmalen Stege des L-förmigen Profils enthaltene Ebene herausgebogen sind. Der längere der L-förmigen Schenkel mit den Anschlussblechbohrungen 48 wird innenseitig gegen die drei Anschlusssegmente 30 der wärmeabgebenden Lagen 2 angelegt und damit verbunden. Hierfür greift ein Werkzeug, beispielsweise ein Schweißbolzen durch die Bohrungen 32 der anderen wärmeabgebenden Lagen 42 hindurch, um das Anschlussblech 46 gegen die drei wärmeabgebenden Lagen 2 anzuschweißen.

In entsprechender Weise werden die mit Bezugszeichen 52 gekennzeichneten Anschlussbleche für den Anschluss des Pluspols jeweils mit den Anschlusssegmenten 30 der anderen wärmeabgebenden Lagen 42 verbunden. Diese Anschlussbleche 52 haben keine Bohrungen und sind wesentlich kürzer als das Anschlussblech 46. Die Anschlussbleche 52 sind jeweils lediglich einem Anschlusssegment 30 einer einzigen wärmeabgebenden Lage 42 zugeordnet. Auch deren längerer Schenkel des L-förmigen Profils liegt flächig gegen die Innenseite des zugehörigen Anschlusssegmentes 30 an.

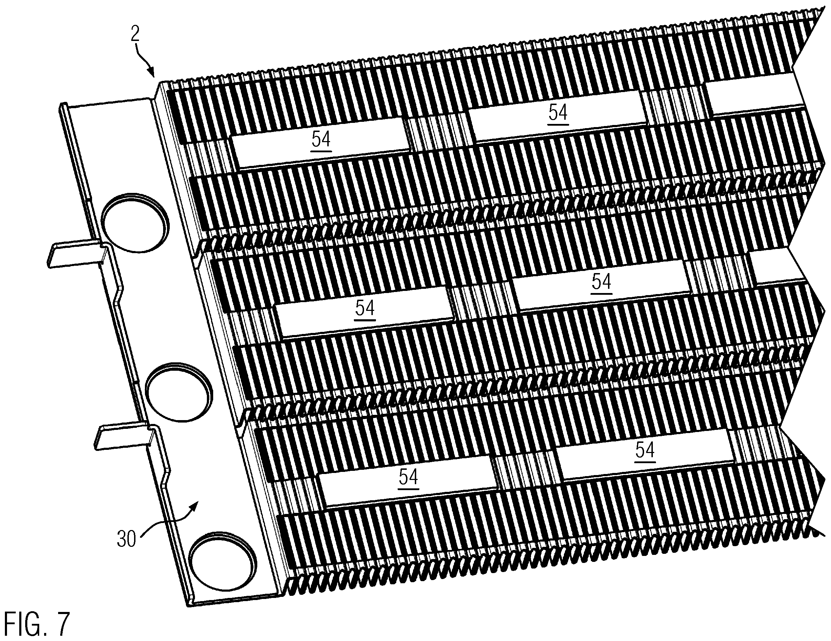

Nachfolgend wird die Herstellung des in Fig. 6 gezeigten Heizblocks 38 unter Einschluss des Kunststoffrahmens 36 unter Bezugnahme der Fig. 7 bis 9 erläutert.

Zunächst können die drei wärmeabgebenden Lage 2 über das Anschlussblech 46 miteinander verbunden werden. Hierdurch ist eine Einheit ausgebildet, die in Fig. 7 gezeigt ist. Auf die Anlagenflächen 20 werden mit Abstand in Längsrichtung zueinander PTC-Elemente 54 aufgeklebt. Vorliegend erfolgt die Kontaktierung der PTC-Elemente 54 über die wärmeabgebenden Lagen 2. Entsprechend werden die PTC-Elemente 54 mit einem elektrisch leitenden Kleber an den wärmeabgebenden Lagen 2 vorgesehen. Fig. 7 verdeutlicht dementsprechend den Masseanschluss der PTC-Elemente 54. Bei dem gezeigten Ausführungsbeispiel sind die wärmeabgebenden Lagen stromführend.

Danach wird der Kunststoffrahmen 36 über die drei wärmeabgebenden Lagen 2 gelegt. Der Kunststoffrahmen 36 hat einen vorliegend kastenförmig ausgebildeten Vorsprung 56, der als Steckergehäuse dient und zur Führung eines Gegensteckergehäuses angepasst ausgebildet ist. Der kastenförmige Vorsprung 56 nimmt die elektrischen Anschlussfahnen 50, 53 in sich auf. Allerdings überragen in Längsrichtung der wärmeabgebenden Lagen 2 die Anschlusssegmente 30 den Vorsprung 56. Entsprechendes gilt für die weiteren wärmeabgebenden Lagen 42, die in Fig. 9 dargestellt sind, nachdem die PTC-Elemente 54 mit den durch diese wärmeabgebenden Lagen 52 gebildeten Anlagenflächen 20 verklebt worden sind. So umgreifen die Anschlusssegmente 30 der wärmeabgebenden Lagen 2, 42 den Vorsprung 56, sodass der Kunststoffrahmen 36 formschlüssige mit dem Heizblock 38 verbunden ist. Durch das Innere des Vorsprungs 56 können nun beispielsweise die Anschlussbleche 52 für die Plus-Anschlussfahnen 52 eingeführt und in der zuvor beschriebenen Weise mit den entsprechenden Anschlusssegmenten 30 verbunden werden.

Fig. 11 zeigt die Wirkung der Einkerbungen 22, die einen Luftdurchtritt zwischen der Außenseite der äußeren wärmeabgebenden Lagen 2, 42 und der Innenumfangsfläche des Kunststoffrahmens 36 ermöglichen. Sofindet auch hier eine hinreichende Kühlung statt, sodass der Kunststoffrahmen 36 nicht überhitzen kann.

### Bezugszeichenliste

- 2: wärmeabgebende Lage
- 4: Blech
- 6: Anschlussbereich
- 8: Wärmeabgabebereich
- 10: Wärmeübertragungsrippe
- 12: Steg
- 14: Verbindungssteg
- 16: Umbiegung
- 18: Mittellängsachse
- 20: Anlagefläche
- 22: Einkerbung
- 24: große Durchbrechung
- 26: kleine Durchbrechung
- 28: Biegelinie
- 30: Anschlusssegment
- 32: Bohrung
- 34: Verriegelungsvorsprung
- 36: Kunststoffrahmen
- 38: Heizblock
- 40: Luftaustrittsfläche
- 42: wärmeabgebende Lage
- 44: Lufteintrittsfläche
- 46: Anschlussblech
- 48: Anschlussblechbohrung
- 50: elektrische Anschlussfahne
- 52: Anschlussblech
- 53: Anschlussfahne
- 54: PTC-Element
- 56: Vorsprung
- E1: erste Ebene
- E2: zweite Ebene

## Patentansprüche

1. Elektrische Heizvorrichtung, insbesondere für ein Kraftfahrzeug, mit einem einander gegenüberliegende Flächen für einen Eintritt (44) und einen Austritt (40) für zu erwärmende Luft ausbildenden Heizblock (38) mit zumindest einer wärmeerzeugenden Lage mit zumindest einem PTC-Element (54) und beidseitig an der wärmeerzeugenden Lage anliegenden wärmeabgebenden Lagen, wobei eine der wärmeabgebenden Lagen (42) die Fläche für den Eintritt (44) und die andere der wärmeabgebenden Lagen (2) die Fläche für den Ausritt (40) ausbildet und die wärmeerzeugende Lage (2, 42) zwischen den wärmeabgebenden Lagen angeordnet ist,
**dadurch gekennzeichnet, dass** die wärmeabgebenden Lagen (2, 42) jeweils durch ein stanzbearbeitetes und mäandrierend gebogenes Blech (4) gebildet sind, welches eine durch mehrere Stege (12) des Blechs (4) gebildete Anlagefläche (20) zur Kontaktierung des PTC-Elementes (54) ausgebildet, wobei von den Stegen (12) jeweils sich in Strömungsrichtung der zu erwärmenden Luft erstreckende Wärmeübertragungsrippen (10) abgehen.

2. Elektrische Heizvorrichtung nach Anspruch 1, **dadurch gekennzeichnet, dass** von der Anlagefläche (20) beidseitig sich parallel zu in einer durch die Anlagefläche gebildeten Ebene (E1) erstreckende Wärmeübertragungsrippen (10) abgehen.

3. Elektrische Heizvorrichtung nach Anspruch 1 oder 2, **dadurch gekennzeichnet, dass** die Wärmeübertragungsrippen (10) an Ihren gegenüberliegenden freien Enden jeweils durch einen sich parallel zu den Stegen (12) erstreckenden Verbindungssteg (14) miteinander verbunden sind

4. Elektrische Heizvorrichtung nach Anspruch 3, **dadurch gekennzeichnet, dass** die Verbindungsstege (14) außenseitig mit einer Einkerbung (22) versehen sind.

5. Elektrische Heizvorrichtung nach einem der vorherigen Ansprüche, **dadurch gekennzeichnet, dass** das PTC-Element (54) mit den wärmeabgebenden Lagen (2, 42) elektrisch leitend verklebt ist.

6. Elektrische Heizvorrichtung nach einem der Ansprüche 1 bis 4, **dadurch gekennzeichnet, dass** das PTC-Element (54) unter Zwischenlage einer elektrischen Isolierschicht wärmeleitend an den wärmeabgegebenen Lagen (2, 42) anliegt.

7. Elektrische Heizvorrichtung nach einem der vorherigen Ansprüche, **dadurch gekennzeichnet, dass** der Heizblock (38) in einem Kunststoffrahmen (36) aufgenommen ist, dass der Kunststoffrahmen (36) einander gegenüberliegende Rahmenöffnungen, in denen jeweils mehrere parallel zueinander erstreckende wärmeabgebende Lagen (2, 42) freiliegen, und zumindest einen Vorsprung (56) ausbildet, der zur formschlüssigen Festlegung des Heizblocks (38) an dem Kunststoffrahmen (36) von den beiden wärmeabgebenden Lagen (2, 42) umgriffen ist.

8. Elektrische Heizvorrichtung nach einem der vorherigen Ansprüche, **dadurch gekennzeichnet, dass** die wärmeabgebenden Lagen (2, 42) jeweils identisch ausgebildete wärmeabgebende Elemente aufweisen.

9. Elektrische Heizvorrichtung nach einem der vorhergehenden Ansprüche, **gekennzeichnet durch** ein durch das stanzbearbeitete Blech (4) ausgebildetes Anschlusssegment (30), das mit einem zumindest eine elektrische Anschlussfahne (50, 53) ausbildenden Anschlussblech (46, 52) verbunden ist.

10. Elektrische Heizvorrichtung nach Anspruch 9, **dadurch gekennzeichnet, dass** das Anschlusssegment (30) eine außermittig zu einer Mittellängsachse (18) der wärmeabgebenden Lage (2) angeordnete Bohrung (32) aufweist.

## Claims

1. An electric heating device, in particular for a motor vehicle, with a heating block (38) defining opposing surfaces for an inlet (44) and an outlet (40) for air to be heated, having at least one heat-generating layer with at least one PTC element (54) and heat-emitting layers adjacent the heat-generating layer on both sides, wherein one of the heat-emitting layers (42) forms the surface for the inlet (44) and the other of the heat-emitting layers (2) forms the surface for the outlet (40) and the heat-generating layer (2, 42) is arranged between the heat-emitting layers,
**characterized in that** the heat-emitting layers (2, 42) are each formed by a punched sheet (4) bent in meandering configuration which forms an abutting surface (20) defined by a plurality of webs (12) of the sheet (4) for contacting the PTC element (54), heat-transfer fins (10) extending respectively from the webs (12) in the flow direction of the air to be heated.

2. The electric heating device according to claim 1, **characterized in that** heat transfer fins (10) extend from the abutting surface (20) on both sides parallel to a plane (E1) defined by the abutting surface.

3. The electric heating device according to claim 1 or 2, **characterized in that** the heat transfer fins (10) are each connected to one another at their opposite free ends by a connecting web (14) extending parallel to the webs (12)

4. The electric heating device according to claim 3, **characterized in that** the connecting webs (14) are provided with a notch (22) at their outer side.

5. The electric heating device according to any one of the preceding claims, **characterized in that** the PTC element (54) is electrically conducting bonded to the heat-emitting layers (2, 42).

6. The electric heating device according to any one of claims 1 to 4, **characterized in that** the PTC element (54) is in heat-conductive contact with the heat-emitting layers (2, 42) with the interposition of an electrically insulating layer.

7. The electric heating device according to one of the preceding claims, **characterized in that** the heating block (38) is accommodated in a plastic frame (36), **in that** the plastic frame (36) defines opposite frame openings, in which a plurality of heat-emitting layers (2, 42) extending parallel to each other are exposed, and at least one projection (56), which is surrounded by the two heat-emitting layers (2, 42) for positively locating the heating block (38) at the plastic frame (36).

8. The electric heating device according to any one of the preceding claims, **characterized in that** the heat-emitting layers (2, 42) each comprise identically formed heat-emitting elements.

9. The electric heating device according to any one of the preceding claims, **characterised by** a terminal segment (30) formed by the stamped sheet (4) and connected to a terminal plate (46, 52) forming at least one electrical connection lug (50, 53).

10. The electric heating device according to claim 9, **characterized in that** the terminal segment (30) comprises a bore (32) arranged off-centre with respect to a central longitudinal axis (18) of the heat-emitting layer (2).

## Revendications

1. Dispositif de chauffage électrique, destiné en particulier à un véhicule automobile, avec un bloc chauffant (38) constituant des surfaces mutuellement opposées destinées à une entrée (44) et à une sortie (40) pour de l'air à chauffer, avec au moins une couche productrice de chaleur munie d'au moins un élément à coefficient de température positif PTC (54) et des couches émettrices de chaleur jouxtant de manière bilatérale la couche productrice de chaleur, dans lequel une parmi les couches émettrices de chaleur (42) constitue la surface destinée à l'entrée (44) et l'autre parmi les couches émettrices de chaleur (2) constitue la surface destinée à la sortie (40) et la couche productrice de chaleur (2, 42) est agencée entre les couches émettrices de chaleur,
**caractérisé en ce que** les couches émettrices de chaleur (2, 42) sont respectivement formées d'une tôle (4) pliée, emboutie et méandreuse constituant une surface d'appui (20) formée de plusieurs bandes (12) de la tôle (4) et destinée à venir en contact avec l'élément PTC (54), dans lequel des nervures de transfert de chaleur (10) s'étendant dans la direction d'écoulement de l'air à chauffer s'étendent respectivement à partir des bandes (12).

2. Dispositif de chauffage électrique selon la revendication 1, **caractérisé en ce que** des nervures de transfert de chaleur (10) s'étendant de manière bilatérale parallèlement à un plan (E1) formé par la surface d'appui s'étendent à partir de la surface d'appui (20).

3. Dispositif de chauffage électrique selon la revendication 1 ou 2, **caractérisé en ce que** les nervures de transfert de chaleur (10) sont reliées entre elles au niveau de leurs extrémités libres opposées respectivement grâce à une bande de liaison (14) s'étendant parallèlement aux bandes (12).

4. Dispositif de chauffage électrique selon la revendication 3, **caractérisé en ce que** les bandes de liaison (14) sont munies d'une encoche (22) située du côté extérieur.

5. Dispositif de chauffage électrique selon l'une quelconque des revendications précédentes, **caractérisé en ce que** l'élément PTC (54) est collé de manière électriquement conductrice aux couches émettrices de chaleur (2, 42).

6. Dispositif de chauffage électrique selon l'une quelconque des revendications 1 à 4, **caractérisé en ce que** l'élément PTC (54) jouxte de manière thermoconductrice les couches émettrices de chaleur (2, 42) avec intercalation d'une couche électriquement isolante.

7. Dispositif de chauffage électrique selon l'une quelconque des revendications précédentes, **caractérisé en ce que** le bloc chauffant (38) est accueilli dans un châssis en plastique (36), **en ce que** le cadre en plastique (36) présente des ouvertures de châssis opposées, au sein desquelles sont respectivement exposées plusieurs couches émettrices de chaleur (2, 42) s'étendant parallèlement les unes aux autres, et forme au moins une saillie (56) entourée par les deux couches émettrices de chaleur (2, 42) afin d'immobiliser le bloc chauffant (38) au niveau du châssis en plastique (36) par complémentarité de forme.

8. Dispositif de chauffage électrique selon l'une quelconque des revendications précédentes, **caractérisé en ce que** les couches émettrices de chaleur (2, 42) présentent respectivement des éléments émetteurs de chaleur de conception identique.

9. Dispositif de chauffage électrique selon l'une quelconque des revendications précédentes, **caractérisé par** un segment de raccordement (30) constitué par la tôle (4) emboutie et relié à une tôle de raccordement (46, 52) constituant au moins une cosse de raccordement électrique (50, 53).

10. Dispositif de chauffage électrique selon la revendication 9, **caractérisé en ce que** le segment de raccordement (30) présente un alésage (32) agencé de manière excentrique par rapport à un axe longitudinal central (18) de la couche émettrice de chaleur (2).
